# EUROPEAN PATENT SPECIFICATION

(11) **EP 0 571 216 B1**
(45) Date of publication and mention of the grant of the patent: **05.03.1997**
(21) Application number: 93303948.9
(22) Date of filing: 20.05.1993
(51) Int. Cl.: A23L 1/16

(54) **Method for filling a frying vessel with noodles**
Verfahren zum Befüllen eines Brattopfes mit Nudeln
Méthode de remplissage d'un récipient de friture avec des nouilles

(30) Priority: 21.05.1992 JP 128487/92
(43) Date of publication of application: 24.11.1993
(73) Proprietor: NISSIN SHOKUHIN KABUSHIKI KAISHA, Osaka-shi, Osaka 532 (JP)
(72) Inventor: Yamasaki, Masahiro, Ohtsu, Shiga 520-21 (JP); Chiba, Masaru, Kusatsu, Shiga 525 (JP); Yokogoshi, Takashi, Yamashina-ku, Kyoto 607 (JP); Kodama, Kenji, Kurita-gun, Shiga 520-30 (JP); Yamaya, Tatsuo, Moriyama, Shiga 524 (JP); Yokoyama, Masakazu, Higashi-Osaka, Osaka 577 (JP)
(74) Representative: Rackham, Anthony Charles

(56) References cited:
- FR-A- 2 351 600
- GB-A- 2 147 798
- PATENT ABSTRACTS OF JAPAN vol. 010, no. 098 (C-339)15 April 1986 &
- PATENT ABSTRACTS OF JAPAN vol. 017, no. 052 (C-1022)2 February 1993 &

## Description

The present invention relates to a method for producing instant noodles, and more particularly, in the pre-step of frying, to a method for filling noodles having a fixed length into a frying vessel (hereinafter referred to as "fry retainer").

Conventionally, instant noodles are formed into a line of noodles by a cutter, after kneading the materials of flour, water, kansui or the like, manufacturing a noodle dough, and pressing the noodle dough. Then, after smothering the line of the noodles, the noodles are cut to a fixed length and packed into the fry retainer. Thereafter they are immersed in a frying pan (for fry treatment) containing a heated oil, and then cooled.

When the noodles cut to the fixed length are going to be packed into the fry retainer, it is important to disentangle the noodles and to distribute them substantially uniformly for uniformity of frying and for acquiring a brick of high-quality fried noodles. If they are not sufficiently disentangled and their distribution is not sufficiently uniform, in the frying step the frying treatment will not be uniform and the frying of the centre portion of the brick of the noodles will be insufficient and be "under-done". On the other hand, the frying of the surface portion of the brick will be excessive. Further, there are the problems that the line of the noodles will become maldistributed, the form of the products will not be preferable, and in addition thereto, when hot water is added at the time of cooking, a restoration of the centre portion of the dense noodle brick will be obstructed and will be hard to eat.

The method disclosed in Japanese Patent Provisional Publication No. 56-5062, drops the noodles into the fry retainer through a chute and then they are subjected to an air blast which is intended to pack them into the fry retainer. The method disclosed in Japanese Patent Provisional Publication No. 62-294053, puts a predetermined amount of noodles into the fry retainer, closes the upper opening of the fry retainer with a movable lid, and inserts a nozzle mounted on the lids into the noodles to disentangle them by shooting air radially from the inserted nozzle. Another method uses a vibrating stick which is inserted into the mass of noodles to fill them uniformly into the fry retainers.

However, both of these methods tend to scatter the noodles from the fry retainer and thereby the operation of the automated production line may be inhibited. In addition, the weight of the brick of the noodles will not be uniform.

Further, in the method using the vibrating stick, the noodle are apt to be twisted and damaged, and it becomes hard to fry them uniformly. Also, using either the air blast or the vibrating stick, there are problems of installation leading to complicated and large-scaled constructions.

In view of the problems in the prior art aforementioned, an object of the present invention is to provide a method for filling noodles in the production method of the instant noodles whereby the distribution of the noodles is substantially uniform, so that the frying of the noodles can be entirely and uniformly carried out without maldistribution from the surface of the brick of the noodles to the centre thereof, and the quality and the form of the noodles in the obtained fried brick of the noodles are fine, and are easy to cook by adding hot water.

According to the invention there is provided a method for filling noodles to fry them in which the noodles, cut to a fixed length, are put into a fry retainer, and is characterized in that they are then subjected to pressurizing downwardly in that fry retainer by contact with a pressure member which descends into the fry retainer at the time of pressurizing the noodles, and they are thereafter fried.

According to the filling method of the present invention, the noodles held in the fry retainer are vertically and downwardly pressurized with the pressure member and the centre portion thereof, otherwise being apt to be half-fried at the time of frying step, is pressurized and thereby the distribution of the noodles are spread and comes to be uniform on both sides and vertically. Further, by pressurizing the noodles, a space between the upper portion of the noodles held in the fry retainer and the lid is formed, and the noodles can spread into that space during frying.

Accordingly, the distribution of the noodles pressurized as mentioned above and held in the fry retainer comes to be uniform on the both sides and throughout the vertical direction; thereby, the frying of the noodles are entirely and uniformly carried out in the frying of the next step without maldistribution from the surface of the brick of the noodles to the centre thereof, and noodles of fine quality and form are obtained.

Further, in the filling method of the present invention at least, the pressure member is preferably part spherical so that when the noodles are pressurized, the close centre portion of the noodles are squeezed out along with the spherical edge, and thereby a more uniform filling becomes possible.

Consequently, the instant noodles produced by the method of the present invention will restore easily when cooked by adding the hot water at the time of eating.

Further, according to the present invention, scatter of the noodles from the fry retainer is not caused, thereby, the operation of the automated production line will not be inhibited. In addition thereto, the weight of the brick of the noodles becomes uniform. Therefore it can provide the filling method in the producing method of the instant noodles without rubbing and damaging the noodles at the time of filling.

Further, when using the method of the present invention one can use apparatus having a simple structure.

Preferably, the outer dimension of the pressure-member is smaller than an inner dimension of the fry retainer.

The invention will now be illustrated, by way of example, with reference to the accompanying drawings, in which:
Figure 1 is a schematic view showing a first embodiment of the filling method of the noodles of the present invention;
Figure 2 is a schematic view showing a second embodiment of the filling method of the noodles of the present invention;
Figure 3 is a vertical-sectional view of the pressure member used in the filling method of the present invention; and
Figure 4 is a schematic view showing the difference on the size between the fry retainer and the pressure member used in the filling method of the noodles of the present invention.

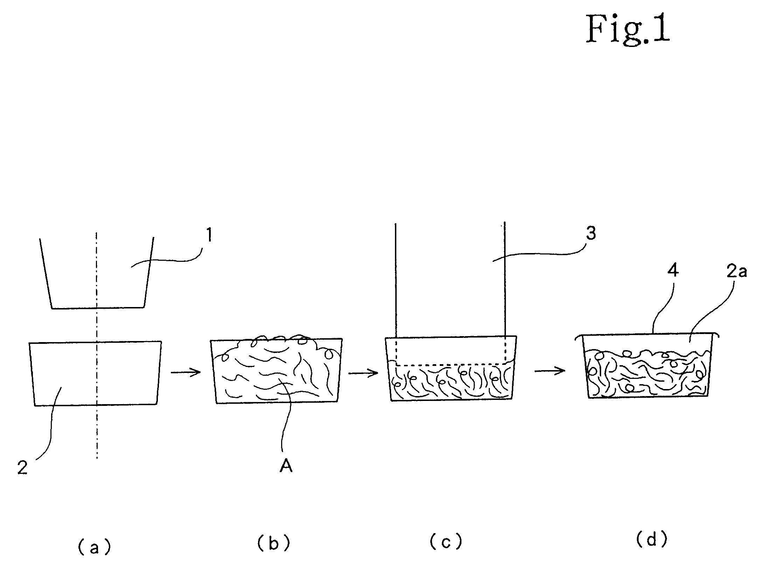

In the present invention, first of all, the noodles are prepared conventionally by kneading the materials like the flour, the water, the kansui or the like, preparing the noodle dough, pressurizing the noodle dough, and preparing the noodle with a cutting roll. Then, after steaming, the noodles are cut into a fixed length and weighed into predetermined amounts. Then, as shown in Figure 1a, they are dropped into a fry retainer 2 from a hopper 1 of a cutting-throwing device (not shown) and the situation as shown in Figure 1b is reached.

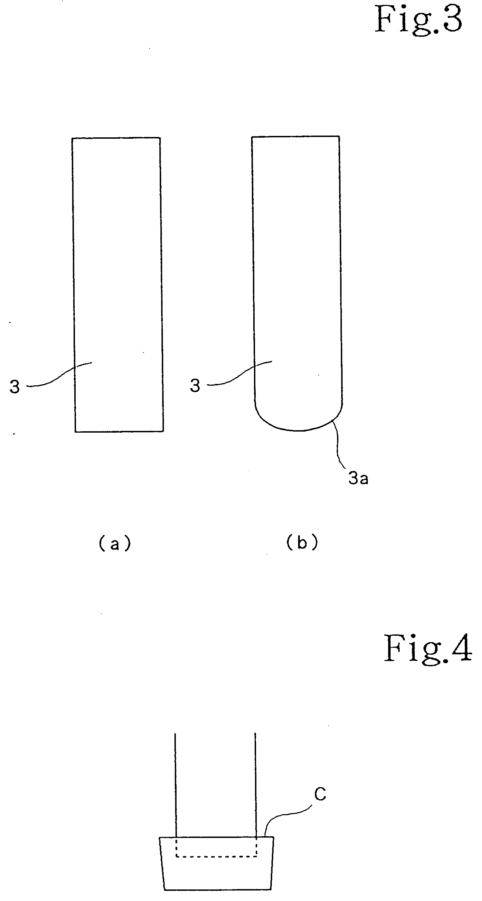

Then the noodles A put into the fry retainer 2 are uniformly packed into that fry retainer by a cylindrical pressure member 3 which is shown in Figure 3a descends downwardly and vertically as shown in Figure 1c.

Thereafter the noodles A held in the fry retainer 2 are fried, as shown in Figure 1d, by closing the upper opening of the fry retainer 2 with a lid 4, immersing it into an oil pan (not shown) containing heated oil and passing the oil thereinto through a lot of holes (not shown) formed at the bottom of the fry retainer 2.

As mentioned above, by pressing the noodles A held in the fry retainer 2 with the pressure member 3 which descends downwardly, the noodles corresponding to the centre portion of the retainer, which would otherwise be apt to become half-cooked during the frying step, are pressurized and thereby, the noodles spread downwardly and on both sides, and a more uniform distribution is obtained. Further, by pressurizing the noodles A as shown in Figure 1d, a space 2a is formed between the upper portion of the noodles A held in the fry retainer 2 and the lid 4, and thereby, the possibility of the noodles spreading during frying is allowed.

Accordingly, the noodles A pressurized as above and held in the fry retainer 2 come to have a substantially uniform distribution noodles in both upright and horizontal directions. Therefore the frying of the noodles can be entirely and uniformly effected without maldistribution from the surface of the brick of the noodles to the centre thereof, and so noodles of fine quality and form are obtained.

As shown in Figure 4, since the noodles are to flow uniformly downwardly and on the both sides in the fry retainer 2 to form the space C, it is preferable to make a difference between the inner dimension of the fry retainer 2 and the outer dimension of the pressure member 3.

Further, an example of a suitable mechanism for moving the said pressure member 3 vertically is a piston-cylinder mechanism.

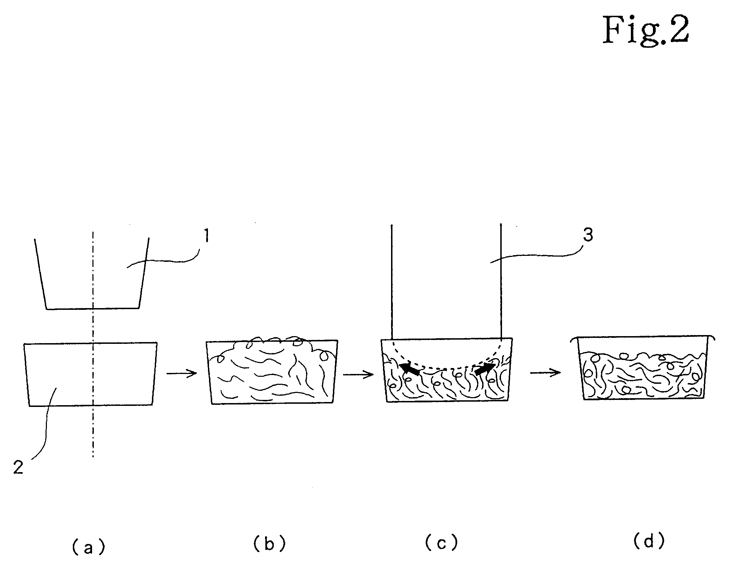

Shown in Figure 2 is a second example of a filling method for the noodles of the present invention. It is a method substantially similar to that of the first example aforementioned and shown in Figure 1, and the difference is in the form of the pressure member 3. Thus edge 3a (cf. Fig 3(b)) of the pressure member 3 is part-spherical. Thereby, during the pressurizing of the noodles A held in the fry retainer 2, a densed centre portion of the noodles are pressed out on the both sides along part-spherical edge 3a and become packed uniformly in the fry retainer.

Examples showing the invention as put into practice and compared with prior methods of producing noodles will now be provided.

After putting the noodles (#24 square (1.25mm pitch, 15cm)) and manufactured by the ordinary method into the fry retainer, each frying step was conducted in a first method (Method (1)) according to Figure 1 with a cylindrical pressure member 3 of ⌀ 45.0mmX150.0mm, and in a second method (Method (2)) according to Figure 2 with a pressure member 3 formed with a radius 18mm at the bottom margin of ⌀ 45mm, (the space between the upper opening of the retainer and the member is 9.25mm).

After two seconds of the pressing (required time for pressurizing 20mm downwardly from the upper opening of the retainer), 20mm of the press stroke (the distance between the upper opening of the retainer and the top surface of the noodles), the noodles were fried to 2 minutes at 155°C.

The results as compared with a conventional method without use of the pressure member are shown in the following Table:

| | Conventional Method | Method (1) | Method (2) |
|---|---|---|---|
| Press Stroke (mm) | --- | 20 | 20 |
| Press Time (sec.) | --- | 2 | 2 |
| Number of Samples | 24 | 24 | 24 |
| Number of Half-Fried Samples | 9 | 0 | 0 |
| Number of Uneven-Fried Portions | 6 | 2 | 0 |
| Number of Normal Products | 9 | 22 | 24 |

As is apparent from the results shown in the Table, in comparison with the conventional method, it is clear that to fry the noodles pressurized and packed with the pressure member 3 into the retainer 2 by the method of the present invention is better in acquiring the uniformly packed situations and conducting the frying treatment uniformly. Further, by using the pressure member as shown in Figure 3b, an improved effect is derived from the form of the pressure member being entirely spherical or, at least, having a lower margin thereof spherical.

## Claims

1. A method for filling noodles to fry them in which the noodles, cut to a fixed length, are put into a fry retainer, and is characterized in that they are then subjected to pressurizing downwardly in that fry retainer by contact with a pressure member which descends into the fry retainer at the time of pressurizing the noodles, and they are thereafter fried.

2. A method as claimed in Claim 1 in which an outer dimension of the pressure member is smaller than an inner dimension of the fry retainer.

3. A method as claimed in either preceding claim in which a bottom edge of the pressure member is flat.

4. A method as claimed in Claim 1 or Claim 2 in which a bottom margin of the pressure member is part-spherical.

## Patentansprüche

1. Verfahren zum Einfüllen Von Nudeln, um sie zu fritieren, wobei die auf eine bestimmte Länge geschnittenen Nudeln in einen Fritierbehälter gegeben werden,
dadurch gekennzeichnet,
daß sie dann einem nach unten gerichteten Druck in diesem Fritierbehälter durch Kontakt mit einem Druckbauteil ausgesetzt werden, das sich abwärts in den Fritierbehälter zu der Zeit der Druckbeaufschlagung der Nudeln bewegt und daß sie danach fritiert sind.

2. Verfahren nach Anspruch 1,
wobei eine äußere Abmessung des Druckbauteils geringer ist als eine innere Abmessung des Fritierbehälteres.

3. Verfahren nach einem der vorstehenden Ansprüche,
wobei die Bodenfläche des Druckbauteils eben ist.

4. Verfahren nach Anspruch 1 oder Anspruch 2,
wobei der Bodenrand des Druckbauteils teilweise kugelförmig ist.

## Revendications

1. Procédé de remplissage de nouilles à faire frire, dans lequel les nouilles, coupées à une longueur déterminée, sont placées dans un récipient de friture, caractérisé en ce qu'elles sont ensuite exposées à une pressurisation vers le bas dans ce récipient de friture, par un contact avec un organe de pression qui descend dans le récipient de friture au moment de la pressurisation des nouilles, et elles sont ensuite frites.

2. Procédé selon la revendication 1, dans lequel la dimension extérieure de l'organe de pressage est inférieure à la dimension intérieure du récipient de friture.

3. Procédé selon l'une quelconque des revendications précédentes, dans lequel un bord inférieur de l'organe de pressage est plat.

4. Procédé selon la revendication 1 ou la revendication 2, dans lequel un rebord inférieur de l'organe de pressage est en partie sphérique.
